# EUROPEAN PATENT APPLICATION

(11) **EP 0 753 705 A1**
(43) Date of publication of application: **15.01.1997**
(21) Application number: 94925049.2
(22) Date of filing: 05.08.1994
(51) Int. Cl.: F23R 3/56, F02C 3/16

(54) **METHOD OF CONVERTING THERMAL ENERGY TO MECHANICAL ENERGY AND A DEVICE FOR CARRYING OUT THE SAME**

(30) Priority: 06.08.1993 RU 93039535
(71) Applicant: Yanovsky, Ilya Yakovlevich, Krasnodar, 350000 (RU); RAKHMAILOV, Anatoly Mikhailovich, Rostovskaya obl., Bataisk, 346730 (SU)
(72) Inventor: RAKHMAILOV, Anatoly Mikhailovich ul. Slavy, 5-13, Bataisk, 346730 (RU)
(74) Representative: Hammar, Ernst
(86) International application number: RU9400183
(87) International publication number: WO9505063

(57) **Abstract**

The invention relates to power generation, specifically to a method of converting thermal energy to mechanical energy in a gas-turbine engine, and to a gas-turbine engine which uses this method. The invention aims to reduce losses at the combustion chamber inlet and raise efficiency and unit power. Before the working medium enters the rotating combustion chamber (2), it is compressed and made to rotate about the gas-turbine engine axis, heated in the combustion chamber (2), allowed to expand on leaving the chamber and fed into a turbine (3) where it expands further. Before leaving the combustion chamber (2), the working medium is made to rotate about the gas-turbine engine axis before being introduced into the turbine (3), the direction of rotation at the inlet of the combustion chamber (2) being opposite to that at the outlet. The gas-turbine engine has a combustion chamber (2) mounted in such a way that it can rotate about the turbine (3). The chamber has an inlet and outlet and a plurality of walls profiled ducts (10) formed by a plurality of partitions (11) which form nozzles (12) at the outlet of the combustion chamber (2) for the expansion of the working medium and are configured at the combustion chamber outlet in such a way that the angle between, on the one hand, their projections onto the combustion chamber extension plane in relation to the line (O-O) of intersection of the plane produced through the engine's longitudinal axis and, on the other hand, the extension plane itself is between 100 and 120 °. At the inlet of the combustion chamber (2), the angle β between the projections of the walls (11) of the profiled ducts (10) onto the extension plane of the combustion chamber (2) in relation to the line (O-O) of intersection of the plane produced through the longitudinal axis of the engine and the extension plane is not greater than 75°.

## Description

### Field of the Invention

The invention relates to the power engineering and, more specifically, to a method for transforming thermal energy into mechanical energy in a gas turbine engine and also to a gas turbine engine for carrying out this method.

### State of the Art

A known method for transforming thermal energy into mechanical energy in a gas turbine engine having a rotary combustor accommodating a stator in the form of a plurality of profiles passages, comprises compressing fluid upstream the inlet of the combustor and imparting a spin to the fluid about the axis of the gas turbine engine, heating the fluid in the combustor, expanding the fluid at the outlet from the combustor, and feeding to the turbine for further expansion therein (cf. USSR Patent No. 576060 of October 5, 1977). The gas turbine engine has a turbine and a compressor, with a combustor that is mounted for rotation with respect to the turbine and that has an inlet, and outlet and a plurality of internal profiled passages defined by a plurality of walls. The walls define nozzles at the outlet of the combustor for expanding the fluid and extend in a such a manner that their projection onto the plane of development of the combustor with respect to the line of intersection with a plane drawn through the longitudinal axis of the engine is inclined to the plane of development at the outlet of the combustor at an angle of 90 to 150°.

When this prior art method is used, the hand of spin of the fluid coming from the compressor to the combustor inlet is opposite to the direction of rotation of the combustor. This results in high losses at the entry of the fluid flow to the combustor because of an abrupt change in the direction of the flow. At air velocities at the inlet of the combustor in modern gas turbine engines of the order of 200 m/s, the entry losses range from 8 to 10% and they are between 12 and 13% at a velocity of 250 to 300 m/s. With the opposite direction of the combustor rotation and fluid flow spin at the inlet of the combustor, these losses will be at least twice as high and may range from 20 to 30%. It will be apparent that the use of the above-described prior art method and a gas turbine engine for its implementation become absolutely unfeasible. In addition, the above-described prior art engine should have bearings between the shafts of the combustor and turbine because they rotate in opposite directions. These bearings operate at high speeds and at high temperatures so that stringent requirements had to be imposed upon them. This not only complicates manufacture and raises cost of an engine, but its reliability is impaired to a large extent, and maintenance becomes more difficult. At the same time, the use of such method and engine appears to be rather interesting because they would allow to take off an additional mechanical power owing to rotation of the combustor. In addition, the rotary combustor allows a special nozzle system at the turbine inlet to be dispensed with. An additional advantage of the rotary combustor is the possibility of providing the inlet edges of the walls of the profiled passages of the combustor outside the combustion zone, namely, in the fuel mixture forming zone.

### Summary of the Invention

The invention is based on the problem of providing a method and a gas turbine engine of the above-described type in which the flow of fluid through the flow duct of the engine between the compressor and turbine and geometry of the interior of the combustor are such as to minimize changes in the direction of fluid flow.

This problem is solved by the fact that in a method for transforming thermal energy into mechanical energy in a gas turbine engine having a rotary combustor, in which fluid is compressed, spun about the axis of the engine, admitted to the rotary combustor, heated therein, and expanded and spun at the outlet of the combustor, according to the invention, the hand of spin of the fluid admitted to the combustor is the same as the direction of rotation of the combustor and is opposite to the hand of spin of the fluid at the outlet of the combustor.

With this method, the direction of fluid flow at the inlet of the combustor is only insignificantly changed because with opposite hands of fluid spin about the longitudinal axis of the engine at the inlet and outlet of the combustor, the hand of fluid spin at the outlet of the compressor is the same as the direction of rotation of the combustor. In this case, entry losses of the combustor are lower than they would be at admission to a stationary combustor because the admission to a stationary combustor requires a minimum fluid flow spin which also results in losses. This is not necessary with a rotary combustor. In addition, this method offers a real possibility of taking off mechanical power from the rotary combustor, e. g., by putting it on the compressor shaft. Temperature of fluid going to turbine blades can be lowered because a part of thermal energy is used in the combustor. As a result, coolant supply used to bring fluid temperature down to a point acceptable for admission to the turbine can be reduced without a decrease in the engine efficiency. Moreover, the expansion ratio of a non-cooled fluid can be 1.2 to 1.5 times greater owing to the combustor rotation.

It is preferred that the angle of fluid spin about the longitudinal axis of a gas turbine engine upstream the inlet of the combustor could be changed. This results in an increased turbine effect of the combustor which is especially important for applications of gas turbine engines in land vehicles in which the engine operates under suddenly and frequently changing loads resulting in variations of torque.

It is preferred that the flow of expanded and spun fluid leaving the combustor be mixed with a coolant upstream the turbine inlet. This not only lowers temperature of fluid before admission to the turbine, but also results in a decrease in the fluid to be compressed upstream the combustor. Efficiency is thus improved.

It is preferred that the fluid be additionally expanded during its mixing with coolant. This ensures an additional utilization of the temperature difference owing to the expansion of fluid before it is finally cooled prior to admission to the turbine so as to improve efficiency and increase power output. When coolant is heated before mixing with fluid, efficiency is improved since flow rate through the turbine increases.

It is preferred that fluid flow be mixed with coolant at the initial stage of expansion and spinning upstream the outlet of the combustor. The walls of the combustor passages are thus cooled so as to have lower requirements imposed upon the materials. Also fluid temperature can be more effectively lowered because relative velocities of flows being mixed are comparatively low, and mixing losses are reduced.

This problem is also solved by the fact that in a gas turbine engine having a turbine, a compressor and a combustor mounted for rotation relative to the turbine and having an inlet, an outlet, and a plurality of internal profiled passages defined by a plurality of walls forming fluid expanding nozzles at the outlet of the combustor positioned at the outlet of the combustor with an angle α of inclination of their projections on a plane of development of the combustor with respect to the line of intersection with a plane drawn through the longitudinal axis of the engine to the plane of development of up to 150°, according to the invention, an angle β of inclination of projections of the walls of the profiled passages on the plane of development of the combustor with respect to the line of intersection with a plane drawn through the longitudinal axis of the engine with the plane of development ranges from 0 to 75°.

In a gas turbine engine having a centripetal turbine, a compressor and a combustor mounted for rotation relative to the turbine and having an inlet, an outlet and a plurality of internal profiled passages defined by a plurality of walls forming fluid expanding nozzles at the outlet of the combustor, according to the invention, the combustor is mounted concentrically with the turbine, and the walls of the profiled passages extend at an angle of inclination α with respect to the radius of the combustor of up to 150° at the outlet of the combustor and at an angle β of inclination with respect to the radius of the combustor ranging from 0 to 75°.

With this construction of the engine, the direction of fluid flow at the entry of the combustor is only insignificantly changes since with the above-mentioned angles α and β defining position of the walls of the profiled passages the hands of fluid spin at the inlet and outlet of the combustor about the longitudinal axis of the engine are opposite, and the hand of fluid spin at the outlet of the compressor is the same as the direction of rotation of the combustor. In this case, losses at admission to the combustor are lower than the losses at admission to a stationary combustor because the flow spin should be minimized for admission to a stationary combustor which brings about losses. This is not necessary for admission to the rotary combustor. In addition, mechanical power can be taken off from the rotary combustor, e. g., by putting it on the compressor shaft. This allows temperature of fluid coming to turbine blades to be lowered because a part of thermal energy is used in the combustor. As a result, coolant supply required to bring fluid temperature down to an acceptable level for admission to the turbine can be substantially reduced without compromising the engine efficiency. Moreover, the expansion ratio of the non-cooled fluid can be increased by a factor of 1.2 to 1.5. With the angle α of inclination of projections of the walls of the profiled passages on the plane of development of the combustor with respect to the line of intersection with a plane drawn through the longitudinal axis of the engine with the plane of development at the inlet of the turbine less than 0, an indefinite flow will obtain, with an impact entry of flow to the combustor resulting in a material rise of losses. In addition, the combustor will function as an exhauster also to results in higher losses. If the angle β is greater than 75°, the combustor flow cross-section decreases to result in the engine specific power being decreased.

It is preferred that a device for changing the angle of spin of fluid, coming from the compressor be provided upstream the inlet of the combustor. This allows the turbine effect of the combustor to be enhanced which is especially important in applications of gas turbine engines in land vehicles in which the engine operates under suddenly changing loads resulting in torque fluctuations.

The device for changing the angle of spin of fluid coming from the compressor is preferably controllable. This allows the combustor operating conditions to be optimized for making it adaptable to rapidly changing loads.

The walls of the profiled passages have interior cavities which communicate on the one side with a coolant source and on the other side, with the turbine inlet. This ensures an intensive cooling of the walls of the profiled passages that can be made of conventional materials normally used in the manufacture of turbines. In addition, coolant can be thus supplied to the inlet of the turbine for mixing with the heated fluid so as to bring the fluid temperature down to the level acceptable for the turbine.

It is preferred that the interior cavities of the walls of the profiled passages communicate with the interior of the combustor. This construction ensures a premixing of the fluid with coolant, and the cooling of the passage walls and walls of the combustor is also improved. Reliability is thus enhanced.

It is preferred that a mixing chamber communicating with a coolant source be provided between the outlet of the combustor and the inlet of the turbine. This improves conditions for mixing the heated fluid with coolant to obtain the fluid flow fed to the turbine that is uniform over the cross-section.

It is preferred that a device for heating coolant be provided between the mixing chamber and the coolant source. This allows fluid flow rate to be increased so as to raise specific power of the engine.

### Brief description of the Drawings

The invention will now be described with reference to the accompanying drawings schematically illustrating embodiments of the invention in the form of non-limiting examples and in which:
Fig. 1 is a schematic view of a gas turbine engine illustrating an embodiment of a method for transforming thermal energy into mechanical energy according to the invention;
Fig. 2 is a schematic view of a gas turbine engine illustrating another embodiment of a method for transforming thermal energy into mechanical energy according to the invention;
Fig. 3 is a schematic view of a gas turbine engine according to the invention, a longitudinal section;
Fig. 4 is an enlarged developed view of a part of the flow duct of the gas turbine engine of Fig. 3 between an axial compressor and turbine;
Fig. 5 is an embodiment of a gas turbine engine with a centripetal turbine, a longitudinal section;
Fig. 6 is an enlarged view, partially in section, along lines VI-VI in Fig. 5.

### Preferred Embodiments of the Invention

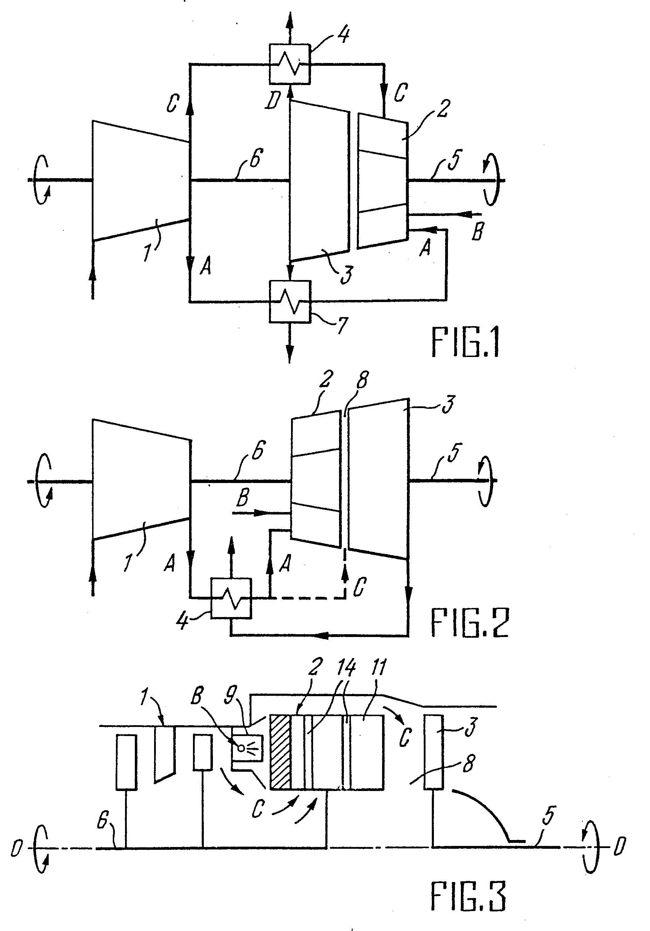

A method according to the invention is carried out as follows (see Fig. 1). Fluid in the form of an oxidant (air) is fed from a compressor 1 as shown by arrow A to the inlet of a combustor 2 to which fuel is also fed from a source (not shown) as shown by arrow B. The fuel is fed to a stator or to a chamber provided directly upstream combustor 2. Mixture formation occurs before combustion of the fuel with air, and the resulting mixture flow is spun about the longitudinal axis of the gas turbine engine by compressor 1. As a result, a spun flow of the heated fluid is formed upon combustion, and this flow moves through combustor 2. Combustor 2 has in its interior a plurality of profiled passages defined by curvilinear walls as it will be described in detail and shown later, and the combustor can rotate owing to the provision of such passages. Rotation of the combustor is enhanced because the profiled passages define nozzles (subsonic or hypersonic) at the outlet of combustor 2 to give rise to a jet draft. These nozzles expand the heated fluid and give rise to a jet draft. The expanded and spun fluid is admitted from the outlet of combustor 2 to a turbine 3 in which it is further expanded to perform useful work. A coolant such as air from compressor 1 may be fed as shown by arrow C through a heat exchanger 4 heated with exhaust gases from turbine 3 fed as shown by arrow D or by any other method. The coolant may also be fed directly from the compressor. Coolant may also be in the form of exhaust gases from turbine 3 (not shown). As shown in Fig. 1, combustor 2 is mounted on a shaft 5, and compressor 1 is mounted on shaft 6. Turbine 3 is also mounted on shaft 6. Therefore, turbine 3 is caused to rotate by fluid fed from rotating combustor 2. According to the invention, owing to the geometry of passages of combustor 2, the hand of fluid spin about the longitudinal axis of the gas turbine engine at the inlet of combustor 2 is opposite to the hand of spin of the fluid going from the outlet of combustor 2 to turbine 3. It will be apparent that shaft 6 of the compressor and turbine rotates in one direction, and shaft 5 rotated in the opposite direction so that the main (useful) power can be taken off at this shaft. Turbine 3 drives compressor 1 mounted on shaft 6. It is understood that it is much more expedient to take off the main (useful) power from combustor 2 as fluid, having the highest thermodynamic parameters, is expanded within the combustor. This embodiment of implementation of the method according to the invention is preferable for prime movers of vehicles operating under rapidly changing loads. A power control system for such an engine is more complicated, but this is going to be compensated for by a better efficiency. Combustor 2 in this case actually functions as an active/reactive turbine. Air fed for combustion to combustor 2 is heated in a heat exchanger 7 that is heated with gases from turbine 3, as is well known in the art, to improve mixture formation and enhance the thermal efficiency of the engine.

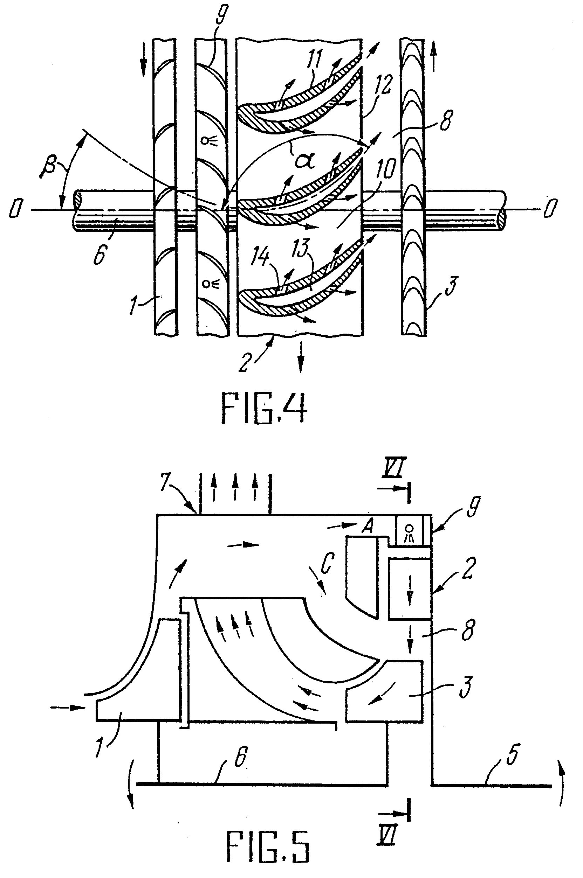

An embodiment of the method according to the invention shown in Fig. 2 is similar to that described above, and the same parts are shown at identical reference numerals as in Fig. 1. In this embodiment, combustor 2 is mounted on shaft 6 of compressor 1 and is used only to drive the compressor. The main (useful) power is taken off at shaft 5 of turbine 3. In this embodiment, coolant is fed along line C to a mixing chamber 8 provided upstream the inlet of turbine 3 to enable more favorable conditions for mixing fluid with the coolant.

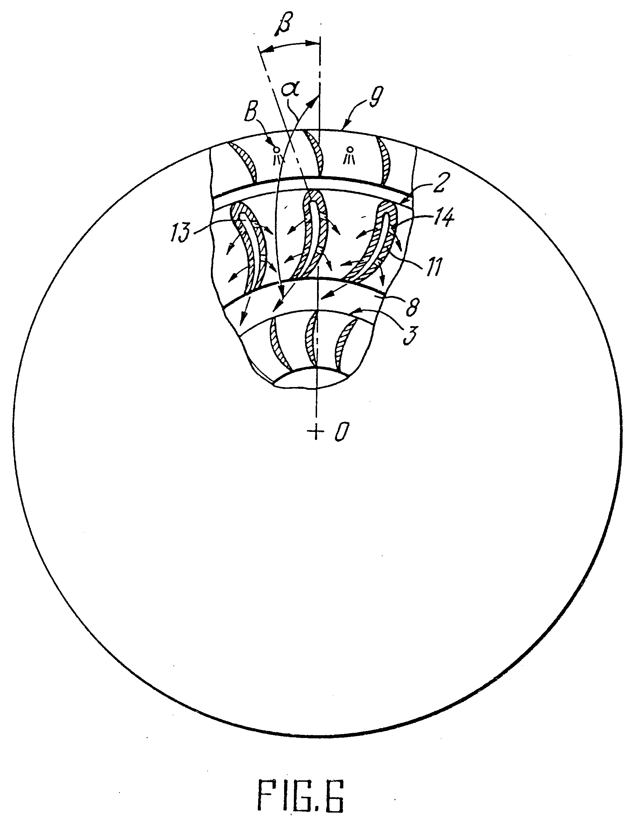

A gas turbine engine according to the invention (Figs. 3 and 4) has compressor 1 mounted on shaft 6 which also support combustor 2 having its inlet communicating with, compressor 1. Fuel nozzles (unreferenced) are provided upstream the inlet of combustor 2 for feeding fuel as shown by arrow B. A stator 9 is mounted upstream the inlet of combustor 2. Turbine 3 rotating on its shaft 5 is provided at the outlet of combustor 2. In addition, a heat exchanger (not shown) may be provided upstream the inlet of the combustor to heat fluid (air) before its supply for mixing with the fuel for the formation of an air-fuel mixture.

The interior of combustor 2 is divided into a plurality of profiled passage 10 (Fig. 4) defined by walls 11. The geometry of walls 11 is such that passages 10 define at the outlet of combustor 2 subsonic or hypersonic nozzles 12 for expanding the fluid flow leaving combustor 2. Walls 11 are made in such a manner that at the outlet of combustor 2 the angle α of inclination of their projections on the plane of development of the combustor with respect to the line O-O of intersection with a plane drawn through the longitudinal axis O₁-O₁ of the engine (Fig. 3) to the plane of development is up to 150°, and at the inlet of combustor 2, an angle β of inclination of projections of walls 11 of profiled passages 10 on the plane of development of combustor 2 with respect to the line of intersection O-O with a plane drawn through the longitudinal axis O₁-O₁ of the engine to the plane of development ranges from 0 to 75°. With this geometry (angles of incidence), hands of spin of the fluid at the inlet and outlet of combustor 2 are opposite.

As shown in Figs. 3, 4, walls 11 defining profiled passages 10 have internal cavities 13 communicating with a coolant source (compressor 1) and with the outlet of the combustor or with the inlet of turbine 3. This cavities actually define inner passages of walls 11 for coolant supply. Walls 11 can also have apertures (slits) 14 for supplying a part of coolant to the outer surfaces of walls 11 and also for cooling the outer walls (unreferenced) of combustor 2. In a specific case, walls 11 can be made of a porous material. In order for coolant to pass through the pores, it should have an appropriate pressure in excess of the pressure within profiled passages 10. The coolant fed from cavities 13 of walls 11 of combustor 2 is admitted to mixing chamber 8 provided between the outlet of combustor 2 and the inlet of turbine 3 in which it is mixed with streams of fluid leaving profiled passages 10 for admission of a cooled fluid to turbine 3.

Stator 9 are provided upstream the inlet of combustor 2 to change the angle of fluid spin. Fuel nozzles (unreferenced) are provided in the stator. Stator 9 may be controllable (with turning vanes) to optimize conditions under rapidly changing loads.

In operation of the gas turbine engine according to the invention, air from compressor 1 which is first driven by a starter motor (not shown) is fed to combustor 2, namely, to profiled passages 10 defined by walls 11. The air is initially spun by compressor 1, and its spin is increased or decreased by stator 9. The angle of incidence β at the entry to the profiled passages 10 ranges from 0 to 75° which ensures an optimum (non-impact) admission of the compressed fluid to passages 10. Before it is admitted to passages 10, fluid is mixed with fuel in the zone between stator 9 and the inlet of combustor 2 in which fuel combustion is started by an igniter (not shown). As a result, a heated and compressed fluid is taken off which moves at a high velocity through profiled passages 10. The inlet edges of walls 11 are in the coolest zone and do not require a special cooling. As the angle of outlet α of the fluid at the outlet of combustor 2 is up to 150°, the flow is spun in the opposite direction to give rise to a jet draft. Therefore, nozzles 12 and the angle α defining their position ensure rotation of combustor 2 on shaft 6. This rotation is used to drive compressor 1. The angle α can be from 91 to 150°. The lower limit of this angle is determined the maximum spin conditions, but the outlet cross-section of the profiled passages in this case will be about zero, and such an engine will not be operable. This angle α can practically be within the range of 100 to 120°. With an angle of 120° torque begins to decrease because of an increase in the axial component of the jet draft owing to a lower spin, and with the angle of 150° a material decrease in torque occurs.

Fluid leaving profiled passages 10 is admitted to mixing chamber 8 to which a coolant (e. g., air from compressor 1) is also fed as shown by arrow C (Fig. 3). When fluid is mixed with coolant in mixing chamber 8, a fluid flow is formed having a temperature acceptable for admission to turbine 3. The coolant fed to mixing chamber 8 may be first caused to pass through the same heat exchanger that is used to heat the air fed to the combustor, or it can be heated in a special heat exchanger. This ensures an increase in the flow rate through turbine 3 and in power output and efficiency of the engine. Turbine 3 rotates shaft 5 at which useful power is taken off for a user.

In operation of the gas turbine engine, a part of the coolant goes into internal cavities 13 of walls 11 of passages 10 as shown by arrows C in Fig. 3 and then passes through slits 14 to cool down then outer surface of walls 11 by forming a film coolant layer. It also cools down the walls of combustor 2. This allows requirements to the material of combustor 2 to be less stringent.

Figs.5, 6, in which similar parts are shown at the same reference numerals as in Figs. 3, 4, illustrate an embodiment of a gas turbine engine according to the invention having a centripetal turbine 3. In this embodiment the difference lies in that the combustor is mounted concentrically with the turbine, and the walls of the profiled passages are inclined with respect to the radius of the combustor at an angle α of up to 150° at the inlet of the combustor, and at an angle β of 0 to 75° at the outlet of the combustor. In this embodiment, the gas turbine engine has a heat exchanger 7 for heating the air fed for combustion to the inlet of combustor 2 and for cooling to mixing chamber 8 provided upstream turbine 3. It is understood that these two air flows can be heated by means of special heat exchangers. The heat exchanger is heated with exhaust gases from turbine 3. This gas turbine engine functions similarly to the gas turbine engine illustrated in, and described with reference to Figs. 3, 4.

### Industrial Applicability

When the method of the invention is used, a 500 h.p. gas turbine engine weighing 125 kg has the following characteristics:

| | |
|---|---|
| fuel consumption | 140-145 g/h.p. |

| overall dimensions (with gearcase): | |
|---|---|
| length | 575 mm |
| diameter | 420 mm. |

## Claims

1. A method for transforming thermal energy into mechanical energy in a gas turbine engine having a rotary combustor, comprising compressing fluid, spinning it about the axis of the engine, admitting to the rotary combustor, heating therein, and expanding and spinning at the outlet of the combustor, characterized by the fact that, the hand of spin of the fluid admitted to the combustor is the same as the direction of rotation of the combustor and is opposite to the hand of spin of the fluid at the outlet of the combustor.

2. A method of claim 1. characterized by the fact that the angle of fluid spin about the longitudinal axis of a gas turbine engine upstream the inlet of the combustor is changed.

3. A method of claims 1, 2, characterized by the fact that the flow of expanded and spun fluid leaving the combustor is mixed with a coolant upstream the turbine inlet

4. A method of claim 3, characterized by the fact that the fluid be additionally expanded during its mixing with coolant.

5. A method of claims 3, 4, characterized by the fact that the coolant is heated before it is mixed with fluid.

6. A method of claims 1-5, characterized by the fact that fluid flow is mixed with coolant before it leaves the combustor, at the initial stage of expansion.

7. A gas turbine engine having a turbine (3), a compressor (1)and a combustor (2) mounted for rotation relative to the turbine and having an inlet, an outlet, and a plurality of internal profiled passages (10) defined by a plurality of walls(11) forming fluid expanding nozzles (12) at the outlet of the combustor (2) positioned at the outlet of the combustor with an angle α of inclination of their projections on a plane of development of the combustor with respect to the line of intersection of a plane drawn through the longitudinal axis of the engine to the plane of development of up to 150°, characterized by the fact an angle β of inclination of projections of the walls of the profiled passages on the plane of development of the combustor with respect to the line of intersection of a plane drawn through the longitudinal axis of the engine with the plane of development ranges from 0 to 75°.

8. A gas turbine engine of claim 7, characterized by the fact that a device (9) for changing the angle of spin of fluid coming from the compressor is provided upstream the inlet of the combustor (2).

9. A gas turbine engine of claim 8, characterized by the fact that the device (9) for changing the angle of spin of fluid coming from the compressor (1) is preferably controllable.

10. A gas turbine engine of claims 7-9, characterized by the fact that the walls (11) of the profiled passages (10) have interior cavities (13) which communicate on the one side with a coolant source and on the other side, with the inlet of turbine (3).

11. A gas turbine engine of claim 10, characterized by the fact that the interior cavities (13) of the walls (11) of the profiled passages (10) communicate with the interior of the combustor (2).

12. A gas turbine engine of claims 10, 11 characterized by the fact that a mixing chamber (8) communicating with a coolant source be provided between the outlet of the combustor (2) and the inlet of the turbine (3).

13. A gas turbine engine of claim 12, characterized by the fact that a device for heating coolant be provided between the mixing chamber (8) and the coolant source

14. A gas turbine engine comprising a centripetal turbine (3), a compressor (1) and a combustor (2) mounted for rotation relative to the turbine and having an inlet, an outlet and a plurality of internal profiled passages (10) defined by a plurality of walls (11) forming at the outlet of the combustor fluid expanding nozzles (12), characterized by the fact that the combustor (2) is mounted concentrically with the turbine (3) and by the fact that the walls (11) of the profiled passages (10) extend at an angle α of inclination to the radius of the combustor (2) of up to 150°, and at the outlet, at an angle β of inclination to the radius of the combustor ranging from 0 to 75°.

15. A gas turbine engine of claim 14, characterized by the fact that a device (9) for changing the angle of spin of fluid coming from the compressor is provided upstream the inlet of the combustor (2).

16. A gas turbine engine of claim 15, characterized by the fact that the device (9) for changing the angle of spin of fluid coming from the compressor (1) is preferably controllable.

17. A gas turbine engine of claims 14-16, characterized by the fact that the walls (11) of the profiled passages (10) have interior cavities (13) which communicate on the one side with a coolant source and on the other side, with the inlet of turbine (3).

18. A gas turbine engine of claim 17, characterized by the fact that the interior cavities (13) of the walls (11) of the profiled passages (10) communicate with the interior of the combustor (2).

19. A gas turbine engine of claims 17, 18 characterized by the fact that a mixing chamber (8) communicating with a coolant source be provided between the outlet of the combustor (2) and the inlet of the turbine (3).

20. A gas turbine engine of claim 19, characterized by the fact that a device for heating coolant be provided between the mixing chamber (8) and the coolant source
